# EUROPÄISCHE PATENTSCHRIFT

(11) **EP 2 836 347 B1**
(45) Veröffentlichungstag und Bekanntmachung des Hinweises auf die Patenterteilung: **23.03.2016**
(21) Anmeldenummer: 13718525.2
(22) Anmeldetag: 11.04.2013
(51) Int. Cl.: B29C 45/00, B65D 1/26

(54) **AUS KUNSTSTOFF GESPRITZTES BEHÄLTNIS**
INJECTION MOULDED CONTAINER MADE OF PLASTIC
CONTENEUR MOULÉ EN MATIÉRE PLASTIQUE

(30) Priorität: 11.04.2012 DE 102012103082
(43) Veröffentlichungstag der Anmeldung: 18.02.2015
(73) Patentinhaber: Knauer Holding GmbH & Co. KG, 72581 Dettingen (DE)
(72) Erfinder: POEHLS, Guido, 72555 Metzingen (DE)
(74) Vertreter: Hornig, Leonore
(86) Internationale Anmeldenummer: PCT/EP2013/057543
(87) Internationale Veröffentlichungsnummer: WO 2013/153142

(56) Entgegenhaltungen:
- WO-A1-2007/108678
- DE-U- 7 225 262
- DE-U- 7 227 210
- GB-A- 1 038 897
- JP-A- H08 197 599
- JP-U- S56 156 711
- US-A- 3 679 119

## Beschreibung

Die Erfindung betrifft ein aus Kunststoff gespritztes Behältnis mit den Merkmalen des Oberbegriffs des Patentanspruchs 1.

Becher sowie sonstige Behältnisse aus Kunststoff, werden herkömmlicherweise im Nachgang zur Herstellung des Produktes bedruckt, etikettiert und/oder gesleevt, also mit einem Schrumpfschlauch umhüllt.

Es ist aus der Praxis der EP 1 757 525 bekannt, dass Becher, die im Wege des Spritzgießens hergestellt werden, nicht mehr nachträglich dekoriert werden. Vielmehr werden vorbedruckte Folien in die Spritzgießform einlegt. Dadurch ist es möglich, in einem Arbeitsgang ein fertiges Produkt zu erzeugen. Dieses Vorgehen wird als In-Mould-Labeling-Verfahren (IML-Verfahren) bezeichnet. Derzeit wird versucht, das IML-Verfahren auch im Thermoform-Verfahren zu verwenden. Allerdings führt dies nach heutigem Entwicklungsstand beim Thermoform-Verfahren zu einem erheblichen Geschwindigkeitsverlust, da die bereits geformte Verpackung erst entformt werden muss, bevor Folien eingelegt werden können. Beim Spritzgießen dagegen wird einerseits die Folie in die Form eingelegt und vorzugsweise parallel auf der anderen Seite, welche die Werkzeugseite sein kann, das fertig gespritzte und dekorierte Teil entnommen.

Ein Nachteil des IML-Verfahrens ist, dass der zur Verfügung stehende Querschnitt des Hohlraums durch das Einlegeteil ungünstig reduziert wird. Das Wandungsfließverhältnis, also das Verhältnis des längsten Fließweges zum mittleren Wandquerschitt, verschlechtert sich. Hierdurch kann es schneller zu einem vorzeitigen Erstarren der Schmelze kommen. Folge ist die erhöhte Gefahr einer nicht vollständigen Formfüllung. Um diesen Effekt auszugleichen und formschlüssige Behältnisse zu erhalten, ist es nach heutigem Stand erforderlich, eine dickere Wandstärke zu wählen. Dies führt zu einem erhöhten Materialeinsatz und größeren Gewicht der Becher. Höhere Kosten für Material und Transportkosten der produzierten Behältnisse sind die Folge.

Aus der JP S56 156711 U ist ein Becher bekannt, der mittels eines Spritzgussverfahrens hergestellt ist. Der Becher weist einen Boden und eine Behältniswand auf, in denen Rippen ausgebildet sind. Die Rippen des Bodens gehen von einer Angussstelle im Boden aus und verlaufen spiralförmig. Durch sie wird im Boden eine Stellkante zum Abstellen des Bechers ausgebildet. Weitere Rippen verlaufen von Angussstellen an der Unterkante des Bechers entlang der Wand bis zu deren Oberkante. Die Rippen dienen zur Verstärkung der Becherwand.

Aus der WO 2007/108678 A1 ist ein Behältnis bekannt, das mit einem Spritzgussverfahren hergestellt ist. In der Wand des Behältnisses sind Rippen ausgebildet, die sich vom unteren Rand der Wand nach oben erstrecken und die Behältniswand verstärken. Dabei sind die Rippen kurvenförmig und jeweils paarweise aufeinander zu geneigt. In einem oberen Bereich der Behältniswand. In einem der Ausführungsbeispiele sind in dem oberen Bereich der Behältniswand keine Rippen ausgebildet, so dass diese im Wesentlichen flach ist. in diesem Bereich kann nach dem Herstellen des Behältnisses ein Etikettenelement aufgebracht oder eingeprägt werden.

Aus der US 3 679 199 A ist ein Becher bekannt, der nach mittels eines Spritzgussverfahrens hergestellt wurde. Zur Verstärkung der Becherwand sind dort Rippen ausgebildet, die sich kreuzen und ein rautenförmiges Muster bilden.

Aus der DE 72 25 262 ist eine aus Kunststoff gespritzter Hohlkörper, wie Blumentopf oder Becher bekannt, der Fließrippen aufweist, damit der Hohlkörper schnell und billig hergestellt werden kann und eine größere Festigkeit aufweist. Zum besseren Entformen sind die Fließrippen auf der Außenseite des Hohlkörpers angebracht. Die Fließrippen verlaufen geradlinig von unten nach oben.

Aus der JP H08 197599 A ist eine Spritzgussform sowie ein Spritzgussprodukt bekannt. Es sind dort dünnwandige und dickwandige Bereiche ausgebildet. Mittels der dickwandigen Teile wird eine Verringerung des Fülldrucks während des Herstellungsprozesses erreicht. Die dickwandigen Bereiche erstrecken sich dabei geradlinig entlang des Bodens und der Wand des Produktes.

Aus der GB 1 038 897 A ist ein Becher aus einem thermoplastischen Material bekannt, bei dem longitudinal verlaufende Rippen in der Becherwand ausgebildet sind. Die Rippen dienen dazu, dass der Becher gut angefasst werden kann, wenn er mit einer heißen Flüssigkeit gefüllt wird. Außerdem dienen sie bei der Herstellung zum gleichmäßigen und vollständigen Füllen der Form mit dem thermoplastischen Material. Es werden hierzu wenigstens dreißig Rippen angebracht. Zusätzlich können querverlaufenden Rippen angebracht werden.

Aus der DE 72 27 210 U ist ein Becher bekannt, der mittels Spritzgussverfahren hergestellt wird. Um den Materialaufwand für den Becher möglichst klein zu halten, sind in der Becherwand Profilierungen ausgebildet, mittels welcher die Becherwand, die eine möglichst geringer Dicke aufweisen soll, ausreichend steif gehalten wird. Für die Profilierungen sind verschiedene Ausgestaltung, wie gerade zur Oberkante des Bechers verlaufende Linien, Waffelmuster, Schraubenlinien, ggf. mit Kreuzungsstellen vorgesehen.

Es sind dünnwandige Becher bekannt, die im Wege des Thermoformverfahren, auch Extrusions-/Tiefziehverfahren genannt, hergestellt werden, bei dem ein Granulat zu Folien verarbeitet wird, aus denen dann die Verpackungsteile gezogen werden. Die Grenzen dieses Verfahrens liegen in der Formgenauigkeit und der Wandungsverteilung sowie Einschränkung möglicher Geometrien und Funktionen wie Stapelung der Produkte.

Eine andere Art von besonders dünnwandigen Behältnissen entsteht im Wege von Spritzgießverfahren oder Spritzgussverfahren. Bei diesem Spritzgießverfahren wird in der Regel Kunststoff-Granulat verflüssigt und mit hohem Druck in kürzest möglicher Zeit in einen Hohlraum gespritzt. In dem Hohlraum wird der Kunststoff abgekühlt. Durch das Abkühlen erstarrt der flüssige Kunststoff wieder. Beim Öffnen der Form kann die fertige Verpackung entnommen bzw. ausgeworfen werden.

Vorteil des Spritzgießverfahrens ist die größere Genauigkeit sowie weitgehende Formfreiheit. Es können sehr viele unterschiedliche Geometrien produziert werden. Einzige Voraussetzung ist die Entformbarkeit der Teile, d.h. die Sicherstellung der Möglichkeit der Entnahme des produzierten Teiles aus der Form.

Aus der DE 26 14213 A1 ist ein Verfahren zur Verbesserung der Verfüllung bekannt. Bei diesem Verfahren soll durch stoßweise Druckveränderungen eine vorzeitige Erstarrung verhindert werden. Allerdings wären hier bei Einsatz des IML-Verfahrens größere Wandstärken erforderlich. Die so entstehenden Wandstärken der Becher wären nicht optimiert.

Bekannt sind Becher, die mit diversen unterschiedlich gearteten Fließhilfen, die in Fließrichtung ausgerichtet sind. Hierdurch wird der Schmelzefluss durch Fließhilfen in Fließrichtung erleichtert. Dadurch kommt es zu einer Verbesserung der Verfüllung, so dass dünnwandigere Becher hergestellt werden können. Die Fließhilfen bilden in dem Becher senkrecht nach oben führende wulstartige Verdickungen. Nachteil dieser Becher ist allerdings, dass bei der Produktion die Fließhilfen zu einem verstärkten Voreilen des Kunststoffes führen, was zu einer ungleichmäßigen Füllung der zuletzt zu füllenden Bereiche führt. Die Wandstärke der Becher wird ungleichmäßiger.

Auch führt das ungleichmäßige Verfüllen der zuletzt zu füllenden Bereiche bei einem IML-Verfahren dazu, dass der Kunststoff hinter oder vor die Einlegeteile fließt. Das führt zu einer unkontrollierten Überdeckung der Einlegeteile, was als Hinterspritzung bezeichnet wird. Der Vorlauf führt zu einer optischen Beeinträchtigung des Gesamteindrucks des Bechers. Bei Reduzierung der Wandstärke drohen zudem durch das Voreilen in den Fließhilfen Lufteinschlüsse, die zu einer fehlenden Formschlüssigkeit führen.

In der DE 20 46 958 wird ein Becher beschrieben, der das Problem der ungleichmäßigen Verfüllung dadurch zu lösen versucht, dass die Fließhilfen, als Rippen bezeichnet, ein sich kreuzendes Gitterwerk bilden. Durch näher definierte Rippenstärken in Verhältnis zu der Wandstärke im Übrigen entsteht ein Behältnis, das eine gleichmäßige Verfüllung der Wandflächen aufweist bei einer ebenfalls gleichmäßigen Rippenstärke.

Die Rippenstruktur des Bechers dieser Erfindung weist eine Rautenform auf. Werden die Rauten außenseitig angebracht, werden bei einem IML-Verfahren die anzubringenden Etiketten ebenfalls eine Rautenstruktur aufweisen. Dies führt zu einer schlechteren Lesbarkeit des Labels und Wahrnehmung des darauf dargestellten Inhalts des Behältnisses. Werden die Rippen innenseitig angebracht, ist eine Entnahme aus den Formen praktisch kaum möglich. Auch ist eine Rautenform auf der Innenseite von Bechern unerwünscht. Glatte Innenseiten ermöglichen eine vollständige Entnahmemöglichkeit des eingefüllten Füllgutes. Die Rautenform erschwert dagegen die Entnahme, da das Füllgut aus den Rauten zwischen den sich kreuzenden Rippen nur erschwert und im Zweifel nicht vollständig entnommen werden kann. Es besteht die Gefahr, dass das Füllgut nicht vollständig entnommen werden kann.

Im Hinblick auf diesen Stand der Technik liegt der Erfindung die Aufgabe zugrunde, ein Behältnis zu schaffen, das nach dem IML-Verfahren hergestellt wird, dünnwandig und stabil ist, und auch im Etikettenbereich eine gleichmäßige und möglichst dünne Wandstärke aufweist.

Diese Aufgabe wird durch ein Behältnis mit den Merkmalen des Patentanspruchs 1 gelöst.

Bei dem erfindungsgemäßen Behältnis sind die wulstartigen Verdickungen so ausgebildet, dass sie sich auf der Behältniswand und am Boden nicht kreuzen, und jeweils einen Krümmungsradius mit konstantem Vorzeichen aufweisen. Sie haben somit einen Verlauf von Diagonalen oder in eine Richtung gebogenen Linien. Hierdurch wird erreicht, dass die Behältnisse mittels eines Spritzgussverfahrens mit einer sehr dünnen Behältniswand hergestellt werden können. Die wulstartigen Verdickungen entstehen entlang von in der Spritzgussform vorgesehen Fließhilfen, die entsprechend der Form der wulstartigen Verdickungen vorgesehen sind. Aufgrund der erfindungsgemäßen Form der Fließhilfen wird während des Produktionsprozesses eine gleichmäßige Fließfront des Kunststoffes gewährleistet. Hierdurch werden Lufteinschlüsse durch vorzeitiges Erstarren des Kunststoffes verhindert.

Durch diesen Verlauf der wulstartigen Verdickungen wird der Schmelzefluss so gelenkt, dass in den von vorzeitiger Erstarrung oder Abfrierungen bedrohten Bereichen der Schmelzefluss durch Querschnittsverstärkung und Erhalt der plastischen Seele vor vorzeitiger Erstarrung geschützt wird. Dies führt dazu, dass die Schmelzefront nahezu gleichmäßig in alle zu füllenden Bereiche fließt. Hierdurch wird eine gleichmäßige Füllung gewährleistet. Es wird dabei auch verhindert, dass geschmolzener Kunstsoff in den Bereichen der Fließhilfen vorauseilt und wieder nach unten läuft. Hierdurch wird einerseits unnötiges Material eingespart und andererseits verhindert, dass bei einem IML-Verfahren in den Bereichen, in denen ein Einlege-Element aufgebracht wird, das Einlege-Element mit herablaufendem Kunstsoff teilweise bedeckt wird oder dass aufgrund der Voreilung des flüssigen Kunststoffes die Einlege-Elemente hinterspritzt werden, da der Kunststoff unkontrolliert hinter das Einlege-Element fließt.

Aufgrund des erfindungsgemäßen Verlaufs der wulstartigen Verdickungen des Bechers wird auch ein einfaches Entformen des Bechers gewährleistet. Da die wulstartigen Verdickungen nur in eine Richtung gekrümmt sind, kann der Becher durch eine Drehbewegung leicht und ohne die Gefahr einer Beschädigung aus der Form entnommen werden. Hierdurch kann das Verfahren bis zum Schluss vollautomatisch durchgeführt werden, so dass das Verfahren vereinfacht wird und Kosten eingespart werden können. Auch die vollständige Entnahme eines Füllguts, mit dem das Behältnis bei Gebrauch gefüllt ist, wird durch die erfindungsgemäße Form der wulstartigen Verdickungen erleichtert.

Gemäß der Erfindung ist ein Einlege-Element, insbesondere ein Papierstreifen, eine Kunststoffstreifen oder eine Folie, in einem Etikettenbereich auf der Außenseite der Behältniswand infolge des Spritzgussverfahrens fest mit dem Behältnis verbunden. Das Behältnis wurde mittels eines IML-Verfahrens hergestellt, bei dem das Einlege-Element in die Spritzgussform eingelegt wird, bevor der geschmolzene Kunststoff in die Spritzgussform eingespritzt wird. Hierbei ist der gleichmäßige Verlauf der Schmelzefront aufgrund der erfindungsgemäßen Anordnung der Fließhilfen und der wulstartigen Verdickungen besonders vorteilhaft, da die Einlege-Elemente auf einfache bei dem Herstellungsprozess mit dem Behältnis verbunden werden, ohne dass sie von Kunststoff bedeckt oder hinterlaufen werden. Es können somit vollständig lesbare Etiketten fest, glatt, zuverlässig und einfach auf das Behältnis aufgebracht werden.

Vorteilhafte Ausführungsbeispiele der Erfindung sind in den Unteransprüchen offenbart.

Gemäß einer vorteilhaften Weiterbildung der Erfindung ist die Neigung der wulstartigen Verdickungen auf der Behältniswand so gewählt, dass der Neigungswinkel N zum Boden etwa zwischen 30° und 60° beträgt. Hierdurch werden besonders gute Ergebnisse für eine Fließfront der Kunststoffschmelze mit konstanter Geschwindigkeit erzielt, so dass das Behältnis die gewünschte dünne, glatte, elastische und stabile Seitenwand aufweist. Es kann auch vorteilhaft sein, wenn der Krümmungsradius der wulstartigen Verdickungen zur Oberkante des Behältnisses hin zunimmt. Hierdurch kann die senkrechte und damit vorauseilende Komponente des flüssigen Kunststoffes gegen Ende des Prozesses weiter reduziert werden, wodurch eine noch gleichmäßigere und dünnere Behältniswand des Behältnisses erzielt werden kann. Es ist günstig, wenn die wulstartigen Verdickungen einen konstanten und zumindest teilweise gerundeten Querschnitt aufweisen. Der Querschnitt kann halbrund, rund oder auch oval ausgebildet sein. Hierdurch werden eine hohe Stabilität und ein leichtes Entformen gewährleistet.

Gemäß einer vorteilhaften Weiterbildung der Erfindung sind von den wulstartigen Verdickungen ausgehende Abzweigungen vorgesehen, deren Länge und Querschnitt kleiner sind als die Länge und der Querschnitt der wulstartigen Verdickungen, wobei sich die Abzweigungen weder gegenseitig noch mit den Verdickungen kreuzen.

Die Größe und Ausrichtung der durch die Fließhilfen entstehenden wulstartigen Verdickungen richtet sich je nach gewünschtem Produkt und Bedarf und bestimmt sich nach dem günstigsten Wandungsfließverhältnis und eingesetztem Material für das konkret zu produzierende Behältnis. Um gerade bei großflächigeren Produkten eine gleichmäßige Wandstärke zu gewährleisten, ist es des Weiteren im Einzelfall sinnvoll, ähnlich einem Adersystem des menschlichen Körpers die wulstartigen Verdickungen zu verzweigen bzw. kleinere oder gleich große Abzweigungen vorzusehen, die je nach Bedarf und Größe des zu spritzenden Produktes in beliebigem Winkel von dem jeweiligen Hauptstrang der jeweiligen Fließhilfe abzweigen. Hierdurch weist das Behältnis dann ein adernähnliches System von Verdickungen auf, je nach Wunsch an der Innenwand oder Außenwand des Behältnisses. Durch die hierdurch ermöglichte gleichmäßige Verteilung des Kunststoffs über den gesamten Bereich des Behältnisses wird zum einen sichergestellt, dass die gesamte Wand des Behältnisses mit Kunststoff verfüllt ist. Gleichzeitig wird eine Hinterspritzung möglicher Einlege-Elemente vermieden.

Vorteilhafterweise ist an der Oberkante des Behältnisses eine Verdickung vorgesehen, welche schlüssig zu der Behältniswand ausgebildet ist. Hierdurch ist ein stabiler Bereich des Behältnisses gewährleistet, auf welchen ein Deckel aufgebracht werden kann.

Gemäß einer vorteilhaften Ausgestaltung der Erfindung weist die Behältniswand einen ersten Bereich auf, in dem die wulstartigen Verdickungen einen größeren Querschnitt aufweisen als in dem zweiten Bereich, wodurch die Behältniswand in dem ersten Bereich eine größere Höhe aufweist als in dem zweiten Bereich. Gemäß einer anderen vorteilhaften Ausgestaltung der Erfindung weist die Behältniswand einen ersten Bereich auf, in dem die wulstartigen Verdickungen dichter beieinander liegen als in einem zweiten Bereich, wodurch die Behältniswand in dem ersten Bereich eine größere Höhe aufweist als in dem zweiten Bereich. Aufgrund der hier verwendeten Anordnung und Ausgestaltung der Fließhilfen wird während des Herstellungsprozesses in dem ersten Bereich der Behältniswand ein beschleunigtes Fließen und späteres Erstarren der Schmelzefront bewirkt. Hierdurch wird mehr Kunststoff in diese Bereiche verfüllt. Die längere Fließfähigkeit der Schmelzefront ermöglicht eine längere Becherwand. Es entsteht ein Behältnis mit unterschiedlichen Wandlängen bei dennoch vollständiger Füllung. Die wulstartigen Verdickungen auf den längeren Behälterflächen sind dicker ausgeprägt, auf den kürzeren Behälterflächen entsprechend dünner. Dabei wird gewährleistet, dass die Wandstärke - abgesehen von den wulstartigen Verdickungen - möglichst gleichmäßig und dünn sind.

Vorteilhafterweise können Behältnisse mit unterschiedlichen Kantenlängen des Einliege-Elements ausgebildet werden; denn durch unterschiedliche Ausprägungen der Fließhilfen ist es möglich, innerhalb der Form die Fließfront zur gleichen Zeit an allen Enden des Einlegers bereitzustellen. Dies ermöglicht Behältnisse mit entsprechend variablen Einlege-Elementen bei vollständiger Verfüllung.

Gemäß der Erfindung kann das Behältnis auch ein anderes Material als Kunststoff umfassen, sofern sich das Material für die Verarbeitung in einem Spritzgießverfahren geeignet ist. Der genaue Verlauf der Fließhilfen, sowie deren Form, Querschnitt, Dichte, Anzahl, Form und Anzahl der Abzweigungen kann erfindungsgemäß dadurch optimiert werden, dass diese und ähnliche Größen rechnerisch für spezifische Produktanforderungen, wie die Größe des Behältnisses, die gewünschte oder erforderliche Wandstärke, gewünschte Stärke und Form des oberen Behältnisabschlusses bzw. der Verdickung an der Oberkante des Behältnisses etc., optimiert werden.

Weitere Einzelheiten, Merkmale und Vorteile der vorliegenden Erfindung ergeben sich aus der nachfolgenden Beschreibung eines bevorzugten Ausführungsbeispiels unter Bezugnahme auf die Zeichnung.

Es zeigen:

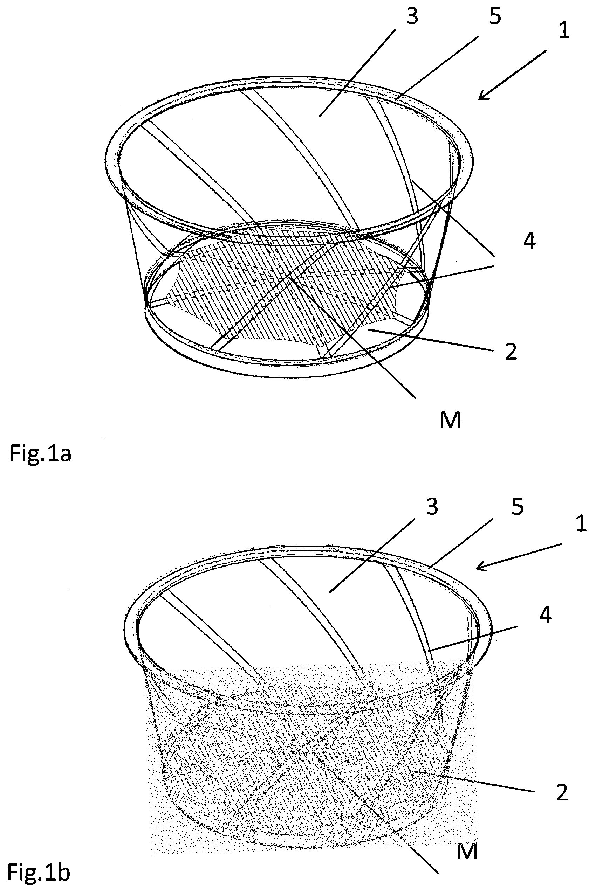

- Fig. 1a bis Fig. 1d: Eine schematische Darstellung der Erzeugung eines Ausführungsbeispiels eines erfindungsgemäßen Behältnisses während des Produktionsverfahrens;

In den Figur 1a bis 1d ist die Erzeugung eines Behältnisses 1 dargestellt. Es wird schematisch die für das Behältnis 1 relevante Formgebung durch eine nicht näher dargestellte Spritzgussform gezeigt. Der Hohlraum der Spritzgussform ist zur Formung des Behältnisses 1 mit einem Boden 2 und einer Behältniswand 3 ausgestaltet. Auf dem Boden 2 und auf der Behältniswand 3 sind in dafür vorgesehenen Bereichen wulstartige Verdickungen 4 vorgesehen, die aus dem Bode 2 und der Behältniswand 3 hervortreten. In den Zwischenbereichen zwischen den wulstartigen Verdickungen 4 weisen der Boden 2 und die Behältniswand 3 des zu erzeugenden Behältnisses 1 eine gleichmäßige Dicke auf. Am Boden 2 sind die wulstartigen Verdickungen 4 Strahlenförmig ausgebildet. In dem gezeigten Ausführungsbeispiel verlaufen sie punktsymmetrisch zu dem Mittelpunkt M es Bodens 2 und sind leicht gebogen, wobei der Krümmungsradius sein Vorzeichen nicht ändert. Die wulstartigen Verdickungen 4 auf der Behältniswand 3 verlaufen von dem Boden 2 mit einer schräg orientierten Neigung zur Oberkante 5 des Behältnisses 1 und sind in eine Richtung gebogen, wobei sie einen Krümmungsradius aufweisen, der sein Vorzeichen nicht ändert. An der Oberkante 5 des Behältnisses 1 ist eine Verdickung vorgesehen, auf welcher ein Deckel aufgebracht werden kann. Die wulstartigen Verdickungen 4 weisen einen konstanten und gerundeten Querschnitt auf. In dem gezeigten Ausführungsbeispiel ist die Anordnung achsensymmetrisch zu der Senkrechten durch den Mittelpunkt M des Bodens 2 gewählt, so dass ein symmetrisches Behältnis 1 erzeugt wird.

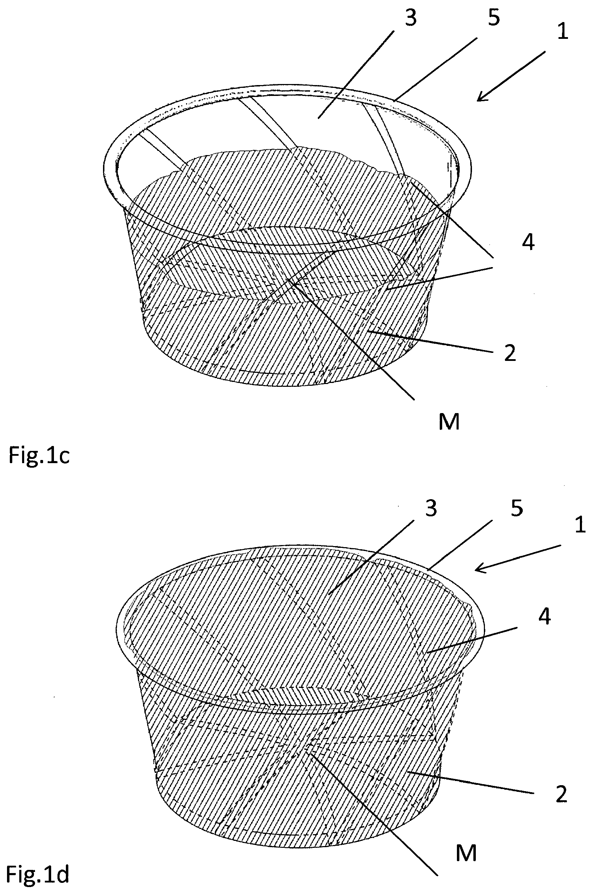

In Figur 1a ist ein erster Schritt des Spritzgussverfahrens zur Erzeugung des Behältnisses 1 dargestellt. Verflüssigter Kunststoff oder eine anderes für dieses Verfahren geeignetes Material wird bei einer sich an dem Mittelpunkt M des Bodens 2 befindenden Angussstelle in den Hohlraum der Spritzgussform eingespritzt und breitet sich achsensymmetrisch zur Senkrechten durch den Mittelpunkt M aus. Die wulstartigen Verdickungen 4 bilden dabei Fließhilfen. Aufgrund der Form und Anordnung der Fließhilfen breitet sich die Fließfront des flüssigen Kunststoffes gleichmäßig und mit einer konstanten Fließgeschwindigkeit aus bis der Boden 2, wie in Figur 1b gezeigt, gelichmäßig bedeckt ist. Der Boden 2 des Bechers 1 weist aufgrund des gleichmäßigen Schmelzeflusses des Kunststoffs eine gleichmäßige Dicke in den Bereichen zwischen den Verdickungen 4 auf. Wie in Figur 1c dargestellt ist, steigt der flüssige Kunststoff gleichmäßig und mit konstanter Geschwindigkeit entlang der Fließfront mittels der Fließhilfen an der Behältniswand 3 nach oben bis zur Oberkante 5, wobei das in Figur 1d dargestellte Behältnis 1 erzeugt wird. Dabei wird die Verdickung an der Oberkante 5 mit Kunststoff ausgefüllt. Die Behältniswand 3 weist in den Bereichen zwischen den wulstartigen Verdickungen 4 eine konstante gleichmäßige Dicke auf. Die wulstartigen Verdickungen 4 werden abhängig von den Produktanforderungen gewählt. Sie können auch so ausgebildet werden, dass der Boden eine andere Dicke als die Behältniswand aufweist.

In dem Hohlraum der Spritzgussform kann ein Einlege-Element im Bereich der Behältniswand eingelegt werden, welches bei der Herstellung fest mit dem Kunstsoff und somit mit der Behältniswand 3 verbunden wird. Aufgrund des gleichmäßigen Flusses des Kunststoffes haftet das Einlege-Element fest auf der Oberfläche der Behältniswand 3 und ist nicht mit Kunststoff bedeckt.

Die hier vorliegende Erfindung löst das Problem durch eine besondere Formgebung und Ausrichtung der Fließhilfen (auch Versorgungswülste genannt), die sich in dem Behältnis als Rippen oder wulstartige Verdickungen ausprägen. Im Rahmen des Produktionsprozesses wird die beginnende Voreilung des Kunststoffes über einen optimierten Verlauf der Fließhilfen über die zu füllenden Flächen geführt, so dass spiegelbildlich wulstartige Ausprägungen entstehen in Form der Fließhilfen. Die wulstartigen Ausprägungen werden nicht oder nicht ausschließlich an der Fließrichtung ausgerichtet, sondern je nach Bedarf in Bogenform oder diagonalen bzw. je nach Größe und Erforderlichkeit der Aufrechterhaltung der Fließfähigkeit in Bezug auf die Fließrichtung schrägen Lagen rund um die Form des zu produzierenden Behältnisses geführt.

Die Versorgungswülste werden in der Vorrichtung, insbesondere in den Spritzgusswerkzeugen, eingebracht. Hierbei spielt es für das Behältnis und seine Produktion keine Rolle, ob diese innenseitig oder außenseitig angebracht sind. Insofern unterscheidet sich die hier vorliegende Erfindung deutlich von der in der DE 20 46 958 B2 beschriebenen Lösung, bei der die Rippen wegen der erforderlichen Gewährleistung einer Entformbarkeit zwingend außenseitig positioniert sein müssen, weil bei der Produktion immer eine Schrumpfung mit zu berücksichtigen ist; diese Schrumpfung führt dazu, dass die Rauten sich quasi auf der Form festsaugen. Eine Entformung ist bei innenliegenden Rauten nicht zerstörungsfrei möglich.

Durch den, je nach Produktanforderung bestimmbaren optimierten Verlauf der wulstartigen Verdickungen wird bei der Produktion der Schmelzefluss aus der eigentlichen Fließrichtung in solcher Weise abgelenkt, dass der fließfähige Kunststoff gezielt so lange durch entsprechend größenmäßig angepasste Querschnitte an die gewünschten Bereiche fließt, in denen ohne entsprechende Unterstützung ein vorzeitiges Erstarren erfolgen würde. Diese technische Lösung führt dazu, dass die Schmelze nahezu gleichmäßig in alle, auch die zuletzt zu füllenden, Bereiche fließt. Die wulstartigen Verdickungen werden je nach Produktanforderung hinsichtlich Größe und gewünschter bzw. erforderlicher Wandstärke und je nach gewünschter Stärke und Form des oberen Becherabschlussbereiches wie Pfade angelegt, so dass bei der Produktion der Kunststoff von der eigentlichen Strömungsrichtung in der jeweils erforderlichen Weise abgelenkt wird. Es entsteht ein Behältnis mit entsprechend schräg ausgerichteten wulstartigen Verdickungen bei gleichzeitig geringer Wandstärke. Diese Wandstärke wird durch die gezielte Ablenkung des Kunststoffs von der Fließrichtung möglichst gering gehalten mit Ausnahme der wulstartigen Verdickungen, die den technischen Erfordernissen im Rahmen des Herstellprozesses geschuldet sind.

So wird ein Behältnis ermöglicht, das eine besonders dünne Wand aufweist. Die wulstartigen Verdickungen befinden sich auf der Innenseite. Die wulstartigen Verdickungen kreuzen sich nicht. Sie weisen eine Schräglage auf in Bezug auf die Becherwand. Der Becher lässt sich durch eine Drehbewegung entgegen der Schrägrichtung der Rippen entformen. Ist aufgrund der Anordnung der wulstartigen Verdickungen oder aufgrund der Form des Behältnisses eine Entformung durch eine Drehbewegung nicht oder nicht vollständig möglich, so kann aufgrund der geringen Wandstärke und Dehnbarkeit aufgrund der Restwärme bei einer unverzüglichen Entformung nach der Herstellung eine Entformung ganz oder zum Teil durch ein kurzfristiges Überstülpen über die Vorrichtung erfolgen.

Anwendung finden kann die Erfindung insbesondere in folgenden Bereichen: Lebensmittelbehälter, insbesondere Becher für die Aufnahme flüssiger oder zähflüssiger, aber auch nach der Verfüllung sich verfestigender Lebensmittel, sofern die in den Behälter zu füllenden Lebensmittel nicht kunststoffzersetzend sind; sonstige Behälter und Becher oder Produkte, insbesondere für die Aufnahme von nicht Kunststoff zersetzenden flüssigen, zähflüssigen oder solchen Substanzen, die sich nach Verfüllung in flüssigem oder zähflüssigem Zustand verfestigen oder Behältnisse zur Aufnahme von festen Substanzen oder Produkten.

## Patentansprüche

1. Aus Kunststoff gespritztes Behältnis (1) mit einem Boden (2), einer Behältniswand (3) und einem Einlege-Element, welches in einem Etikettenbereich auf der Außenseite der Behältniswand (3) fest mit dem Behältnis verbunden ist, wobei das Behältnis (1) mittels eines IML-Verfahrens hergestellt ist, **dadurch gekennzeichnet, dass** der Boden (2) und die Behältniswand (3) eine gleichmäßige Dicke aufweisen, aus der wulstartige Verdickungen (4) nach innen oder außen hervortreten, die von einer Angussstelle im Boden (2) ausgehen, am Boden (2) einen strahlenförmigen Verlauf aufweisen, auf der Behältniswand (3) mit einer schräg orientierten Neigung zur Oberkante (5) des Behältnisses (1) verlaufen, wobei die wulstartigen Verdickungen (4) auf der Behältniswand (3) und am Boden (2) sich nicht kreuzen, jeweils einen Krümmungsradius mit konstantem Vorzeichen aufweisen und so ausgebildet sind, dass sie während des Produktionsprozesses als Fließhilfen eine gleichmäßige Fließfront des Kunststoffes gewährleisten.

2. Behältnis nach Anspruch 1, **dadurch gekennzeichnet, dass** die wulstartigen Verdickungen (4) so ausgebildet sind, dass die Fließfront des flüssigen Kunststoffes sich während des Produktionsprozesses auf dem Boden (2) und auf der Behältniswand (3) jeweils mit konstanter Geschwindigkeit ausbreitet.

3. Behältnis nach einem der vorangehenden Ansprüche, **dadurch gekennzeichnet, dass** der Verlauf und der Querschnitt der wulstartigen Verdickungen für spezifische Produktanforderungen optimiert werden.

4. Behältnis nach einem der vorangehenden Ansprüche, **dadurch gekennzeichnet, dass** die Neigung der wulstartigen Verdickungen (4) auf der Behältniswand (3) so gewählt ist, dass der Neigungswinkel N zum Boden (2) etwa zwischen 30° und 60° beträgt.

5. Behältnis nach einem der vorangehenden Ansprüche, **dadurch gekennzeichnet, dass** der Krümmungsradius der wulstartigen Verdickungen (4) zur Oberkante (5) des Behältnisses (1) hin zunimmt.

6. Behältnis nach einem der vorangehenden Ansprüche, **dadurch gekennzeichnet, dass** die wulstartigen Verdickungen (4) einen konstanten und zumindest teilweise gerundeten Querschnitt aufweisen,

7. Behältnis nach einem der vorangehenden Ansprüche, **dadurch gekennzeichnet, dass** von den wulstartigen Verdickungen (4) ausgehende Abzweigungen vorgesehen sind, deren Länge und Querschnitt kleiner sind als die Länge und der Querschnitt der wulstartigen Verdickungen (4), wobei sich die Abzweigungen weder gegenseitig noch mit den Verdickungen kreuzen.

8. Behältnis nach einem der vorangehenden Ansprüche, **dadurch gekennzeichnet, dass** an der Oberkante (5) des Behältnisses (1) eine Verdickung vorgesehen ist, welche schlüssig zu der Behältniswand (2) ausgebildet ist.

9. Behältnis nach einem der vorangehenden Ansprüche, **dadurch gekennzeichnet, dass** die Behältniswand (3) einen ersten Bereich aufweist, in dem die wulstartigen Verdickungen (4) einen größeren Querschnitt aufweisen als in dem zweiten Bereich, wodurch die Behältniswand (3) in dem ersten Bereich eine größere Höhe aufweist als in dem zweiten Bereich.

10. Behältnis nach einem der vorangehenden Ansprüche, **dadurch gekennzeichnet, dass** die Behältniswand (3) einen ersten Bereich aufweist, in dem die wulstartigen Verdickungen (4) dichter beieinander liegen als in einem zweiten Bereich, wodurch die Behältniswand (3)in dem ersten Bereich eine größere Höhe aufweist als in dem zweiten Bereich.

11. Behältnis nach einem der vorangehenden Ansprüche, **dadurch gekennzeichnet, dass** das Einlege-Element unterschiedliche Kantenlängen aufweist und die wulstartigen Verdickungen so ausgeprägt sind, dass die Fließfront bei der Produktion an allen Enden des Einlege-Elements zur gleichen Zeit bereitgestellt wird.

## Claims

1. Container (1) injection-moulded from plastic, comprising a bottom (2), a container wall (3) and an insert element, which is rigidly connected to the container in a label region on the outer side of the container wall (3), wherein the container (1) is produced by means of an IML process, **characterized in that** the bottom (2) and the container wall (3) have a uniform thickness, from which ridge-like thickenings (4) protrude inwards or outwards, starting from a gate mark in the bottom (2), having a radial course on the bottom (2) and extending on the container wall (3) with an obliquely oriented inclination towards the upper edge (5) of the container (1), wherein the ridge-like thickenings (4) on the container wall (3) and on the bottom (2) do not cross, in each case have a radius of curvature with a constant sign and are formed such that, as flow promoters, they ensure a uniform flow front of the plastic during the production process.

2. Container according to Claim 1, **characterized in that** the ridge-like thickenings (4) are formed such that the flow front of the liquid plastic spreads out on the bottom (2) and on the container wall (3) at a constant rate in each case during the production process.

3. Container according to one of the preceding claims, **characterized in that** the course and the cross section of the ridge-like thickenings are optimized for specific product requirements.

4. Container according to one of the preceding claims, **characterized in that** the inclination of the ridge-like thickenings (4) on the container wall (3) is chosen such that the angle of inclination N in relation to the bottom (2) is approximately between 30° and 60°.

5. Container according to one of the preceding claims, **characterized in that** the radius of curvature of the ridge-like thickenings (4) increases toward the upper edge (5) of the container (1).

6. Container according to one of the preceding claims, **characterized in that** the ridge-like thickenings (4) have a constant and at least partially rounded cross section.

7. Container according to one of the preceding claims, **characterized in that** branches starting from the ridge-like thickenings (4) and of a length and cross section smaller than the length and cross section of the ridge-like thickenings (4) are provided, wherein the branches do not cross one another or the thickenings.

8. Container according to one of the preceding claims, **characterized in that** a thickening that is formed integrally with the container wall (3) is provided at the upper edge (5) of the container (1).

9. Container according to one of the preceding claims, **characterized in that** the container wall (3) has a first region, in which the ridge-like thickenings (4) have a greater cross section than in a second region, whereby the container wall (3) has a greater height in the first region than in the second region.

10. Container according to one of the preceding claims, **characterized in that** the container wall (3) has a first region, in which the ridge-like thickenings (4) are closer together than in a second region, whereby the container wall (3) has a greater height in the first region than in the second region.

11. Container according to one of the preceding claims, **characterized in that** the insert element has differing edge lengths and the ridge-like thickenings are so pronounced that the flow front is provided at all ends of the insert element at the same time during production.

## Revendications

1. Conteneur moulé par injection de matière plastique (1), comprenant un fond (2), une paroi de conteneur (3) et un élément d'insert qui est connecté fixement au conteneur dans une région d'étiquette sur le côté extérieur de la paroi de conteneur (3), le conteneur (1) étant fabriqué au moyen d'un procédé IML (de décoration dans le moule), **caractérisé en ce que** le fond (2) et la paroi de conteneur (3) présentent une épaisseur uniforme de laquelle font saillie des épaississements en forme de boudin (4) vers l'intérieur ou vers l'extérieur, lesquels partent d'un point de carotte dans le fond (2), présentent au niveau du fond (2) une allure en forme de rayon, s'étendent sur la paroi de conteneur (3) avec une inclinaison orientée obliquement par rapport à l'arête supérieure (5) du conteneur (1), les épaississements en forme de boudin (4) sur la paroi de conteneur (3) et sur le fond (2) ne se croisant pas, présentant chacun un rayon de courbure avec un signe constant et étant réalisés de telle sorte qu'ils garantissent pendant le processus de production, à titre d'auxiliaires de coulée, un front de coulée uniforme de la matière plastique.

2. Conteneur selon la revendication 1, **caractérisé en ce que** les épaississements en forme de boudin (4) sont réalisés de telle sorte que le front de coulée de la matière plastique fluide se propage pendant le processus de production sur le fond (2) et sur la paroi de conteneur (3) à chaque fois avec une vitesse constante.

3. Conteneur selon l'une quelconque des revendications précédentes, **caractérisé en ce que** l'allure et la section transversale des épaississements en forme de boudin sont optimisées pour des exigences de produits spécifiques.

4. Conteneur selon l'une quelconque des revendications précédentes, **caractérisé en ce que** l'inclinaison des épaississements en forme de boudin (4) sur la paroi de conteneur (3) est choisie de telle sorte que l'angle d'inclinaison N par rapport au fond (2) soit compris entre environ 30° et 60°.

5. Conteneur selon l'une quelconque des revendications précédentes, **caractérisé en ce que** le rayon de courbure des épaississements en forme de boudin (4) augmente vers l'arête supérieure (5) du conteneur (1).

6. Conteneur selon l'une quelconque des revendications précédentes, **caractérisé en ce que** les épaississements en forme de boudin (4) présentent une section transversale constante et au moins en partie arrondie.

7. Conteneur selon l'une quelconque des revendications précédentes, **caractérisé en ce que** des ramifications partant des épaississements en forme de boudin (4) sont prévues, leur longueur et leur section transversale étant inférieures à la longueur et à la section transversale des épaississements en forme de boudin (4), les ramifications ne se croisant pas mutuellement et ne croisant pas les épaississements.

8. Conteneur selon l'une quelconque des revendications précédentes, **caractérisé en ce qu'**au niveau de l'arête supérieure (5) du conteneur (1) est prévu un épaississement qui est réalisé de manière solidaire avec la paroi de conteneur (3).

9. Conteneur selon l'une quelconque des revendications précédentes, **caractérisé en ce que** la paroi de conteneur (3) présente une première région dans laquelle les épaississements en forme de boudin (4) présentent une plus grande section transversale que dans une deuxième région, de sorte que la paroi de conteneur (3) dans la première région présente une plus grande hauteur que dans la deuxième région.

10. Conteneur selon l'une quelconque des revendications précédentes, **caractérisé en ce que** la paroi de conteneur (3) présente une première région dans laquelle les épaississements en forme de boudin (4) sont situés plus près les uns des autres que dans une deuxième région, de sorte que la paroi de conteneur (3) dans la première région présente une plus grande hauteur que dans la deuxième région.

11. Conteneur selon l'une quelconque des revendications précédentes, **caractérisé en ce que** l'élément d'insert présente des longueurs d'arête différentes et les épaississements en forme de boudin sont imprimés de telle sorte que le front de coulée lors de la production soit fourni en même temps au niveau de toutes les extrémités de l'élément d'insert.
